(19) Europäisches Patentamt
European Patent Office
Office européen des brevets

(11) Veröffentlichungsnummer : **0 037 029**
**B1**

(12) # EUROPÄISCHE PATENTSCHRIFT

(45) Veröffentlichungstag der Patentschrift : **05.10.83**

(51) Int. Cl.³ : **C 08 G 18/38**

(21) Anmeldenummer : **81102089.0**

(22) Anmeldetag : **20.03.81**

(54) **Verfahren zur Herstellung von Polyurethanelastomeren.**

(30) Priorität : **02.04.80 DE 3012864**

(43) Veröffentlichungstag der Anmeldung : **07.10.81 Patentblatt 81/40**

(45) Bekanntmachung des Hinweises auf die Patenterteilung : **05.10.83 Patentblatt 83/40**

(84) Benannte Vertragsstaaten : **BE DE FR GB IT NL**

(56) Entgegenhaltungen :
**EP A 0 017 905**
**BE A 671 062**

(73) Patentinhaber : **BAYER AG**
**Zentralbereich Patente, Marken und Lizenzen**
**D-5090 Leverkusen 1, Bayerwerk (DE)**

(72) Erfinder : **Kopp, Richard, Dr.**
**Wolfskaul 12**
**D-5000 Koeln 80 (DE)**
Erfinder : **Meyborg, Holger, Dr.**
**Bergstrasse 92**
**D-5068 Odenthal (DE)**
Erfinder : **Grögler, Gerhard, Dr.**
**von-Diergardt-Strasse 46**
**D-5090 Leverkusen 1 (DE)**
Erfinder : **Schwindt, Jürgen, Dr.**
**Heinrich-von-Kleist-Platz 4,**
**D-5090 Leverkusen 1 (DE)**

**EP 0 037 029 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung von Polyurethanelastomeren

Die vorliegende Erfindung betrifft ein Verfahren zur Herstellung von vorzugsweise nicht-zellulären Polyurethanharnstoff-Elastomeren. Das Kennzeichen des Verfahrens besteht darin, daß sulfonsäureamidhaltige aromatische Diamine als Kettenverlängerer eingesetzt werden.

Die Herstellung von Polyurethanharnstoffelastomeren aus Polyisocyanaten, höhermolekularen Polyhydroxylverbindungen und aromatischen Diaminen ist bekannt. Um angemessene Verarbeitungszeiten für Reaktivsysteme aus den genannten Ausgangskomponenten zu gewährleisten, setzt man die technisch meistverwendeten reaktionsfähigen aromatischen Isocyanate zweckmäßigerweise mit träge reagierenden Diaminen um. Als Diamine haben sich in diesem Zusammenhang in der Praxis vor allem solche aromatischen Diamine bewährt, deren Basizität und damit auch Reaktivität gegenüber Isocyanaten durch Einführung von Halogen- oder Carboxy-Substituenten herabgesetzt ist. Als Beispiele seien das bisher am meisten verwendete 3,3'-Dichlor-4,4'-diamino-diphenylmethan (MOCA) und der 4-Chlor-3,5-diaminobenzoesäureisobutylester genannt.

In US-PS 3 891 606 wird die Vernetzung von NCO-Präpolymeren aus Polyhydroxylverbindungen und einem Überschuß an Polyisocyanaten mit aromatischen Diaminen beschrieben, deren Reaktivität gegenüber Isocyanatgruppen durch Komplexbildung mit gewissen Alkalimetallsalzen herabgesetzt ist. Der Nachteil dieses Verfahrens liegt darin, daß es auf zwei spezielle aromatische Diamine beschränkt ist. Darüber hinaus muß der Komplex zwischen dem aromatischen Diamin und dem Alkalimetallsalz in einem gesonderten Verfahrensschritt hergestellt werden.

Eine weitere Möglichkeit der Steuerung der Reaktionsgeschwindigkeit zwischen Polyisocyanaten und aromatischen Diaminen besteht darin, die Reaktion in einem organischen Lösungsmittel auszuführen. Verfahren dieser Art werden beispielsweise in US-PS 3 926 922 und in der japanischen Offenlegungsschrift 9195/70 beschrieben. Der Nachteil einer Mitverwendung von organischen Lösungsmitteln liegt auf der Hand : Einerseits wird die Feuer- und Explosionsgefahr erhöht und andererseits ist aus ökonomischen und ökologischen Gründen eine technisch aufwendige Rückgewinnung des Lösungsmittels erforderlich.

Gegenstand der DE 1 122 699 ist ein Verfahren zur Herstellung von Polyurethanelastomeren durch Vernetzung von flüssigen Isocyanat-Präpolymeren mit Gemischen aus primären Diaminen und mehrere Hydroxylgruppen aufweisende Verbindungen unter Formgebung, in welchem eine Dispersion eines pulverförmigen kristallinen Diamins in einem flüssigen, mehrere Hydroxylgruppen aufweisenden Polyester, Polyether oder in Rizinusöl in das Präpolymere bei einer unter dem Schmelzpunkt des Diamins liegenden Temperatur eingebracht und die Masse bei Temperaturen oberhalb des Schmelzpunktes des Diamins in an sich bekannter Weise ausgehärtet wird.

In der DE-OS 2 635 400 wird ein Verfahren beschrieben, bei dem ein feingemahlenes Diamin in einer Polyhydroxylverbindung suspendiert und dann mit einem Polyisocyanat bzw. einem Isocyanatgruppen aufweisenden Präpolymeren unterhalb des Schmelzpunktes des Diamins umgesetzt wird. Es ist dabei auch möglich, das aromatische Diamin direkt als trockenes Pulver in ein Isocyanatgruppen aufweisendes Präpolymer einzurühren. Man erhält so Reaktionsgenische mit langer Topfzeit, die vorzugsweise bei Temperaturen zwischen 80 und 120 °C, besonders bevorzugt 100 bis 110 °C, in jedem Falle aber unterhalb des Schmelzpunktes des aromatischen Diamins, in an sich bekannter Weise zu Polyurethanharnstoffelastomeren ausgehärtet werden.

Die Verfahren, bei denen die als Kettenverlängerer eingesetzten Diamine in heterogener Phase umgesetzt werden, gestatten zwar längere Verarbeitungszeiten, es bleiben jedoch toxikologische Bedenken bestehen.

Es wurde nunmehr gefunden, daß in sulfonamidgruppenhaltigen Diaminen die Reaktivität der Aminogruppen gegenüber Isocyanaten wesentlich verringert ist, worduch eine ausreichende Verarbeitungszeit gewährleistet wird. Darüber hinaus sind derartige Verbindungen wegen der Sulfonamidgruppen auch physiologisch unbedenklich, da sie im Körper leicht zu den entsprechenden Sulfonsäuren abgebaut werden können. Überdies weisen mit Hilfe derartiger Kettenverlängerer hergestellte Elastomere hervorragende mechanische Eigenschaften (Weichheit und trotzdem große Weiterreißfestigkeit) auf.

Gegenstand der Erfindung ist somit ein Verfahren zur Herstellung von Polyurethanharnstoff-Elastomeren durch, gegebenenfalls stufenweise, Umsetzung von

A) Polyisocyanaten, vorzugsweise Diisocyanaten,

B) Verbindungen mit mindestens 2 gegenüber Isocyanaten reaktiven Wasserstoffatomen und einem Molekulargewicht von 400 bis 10 000, vorzugsweise Polyhydroxylverbindungen,

C) ein- oder zweikernigen aromatischen Diaminen als Kettenverlängerungsmittel sowie gegebenenfalls

D) weiteren gegenüber Isocyanaten reaktiven Verbindungen mit einem Molekulargewicht von 32 bis 400 als zusätzlichen Kettenverlängerungsmitteln, gegebenenfalls in Gegenwart von

E) Aktivatoren, Treibmitteln und/oder weiteren an sich bekannten Hilfs- und Zusatzmitteln,

welches dadurch gekennzeichnet ist, daß als Komponente C) Diamine eingesetzt werden, welche an mindestens einem ihrer aromatischen Ringe mindestens eine Sulfonamidgruppe, vorzugsweise in m- und/oder p-Stellung zu einer der Aminogruppen, als Substituenten enthalten, wobei Verbindungen der

allgemeinen Formel

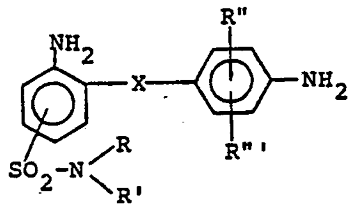

ausgenommen sind, in welcher

X für —S—, 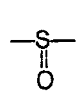 oder 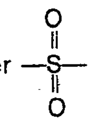 steht.

R und R′ gleich oder verschieden sind und lineare oder verzweigte aliphatische Reste mit 1 bis 4 C-Atomen bedeuten und

R″ und R‴ gleich oder verschieden sind und Wasserstoff, einen Alkylrest, eine Alkoxy- oder eine Alkylmercaptogruppe mit 1 bis 4 C-Atomen darstellen.

Erfindungsgemäß bevorzugte Diamine sind solche der allgemeinen Formel

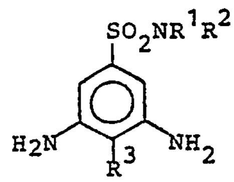

(I)

in der

$R^1$ und $R^2$ gleich oder verschieden sind und für Wasserstoff, einen gegebenenfalls verzweigten Alkylrest mit 1 bis 20, ($R^2$ vorzugsweise mit 1 bis 6 C-Atomen) oder eine Aryl- oder Aralkylgruppe mit 6 bis 20 Kohlenstoffatomen, und

$R^3$ Wasserstoff, einen gegebenenfalls verzweigten Alkylrest mit 1 bis 6 C-Atomen (vorzugsweise Methyl), einen Alkoxyrest mit 1 bis 6 C-Atomen oder Halogen (vorzugsweise Chlor) darstellt,

der Formel

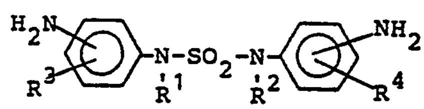

(II)

wobei

$R^1$ bis $R^3$ die oben angegebene Bedeutung haben und $R^4$ der Definition von $R^3$ entspricht, ferner der Formel

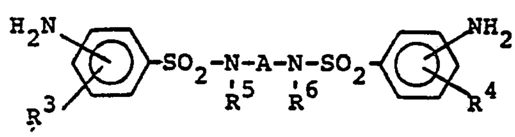

(III)

in der

A eine gegebenenfalls verzweigte und/oder Heteroatome enthaltende Alkylenbrücke mit 2 bis 6C-Atomen darstellt und

$R^5$ und $R^6$ dieselbe Bedeutung wie $R^1$ und $R^2$ haben oder zusammen für eine gegebenenfalls verzweigte und/oder Heteroatome enthaltende Alkylenbrücke mit 1 bis 6 C-Atomen (vorzugsweise einen Ethylenrest) stehen, und der Formel

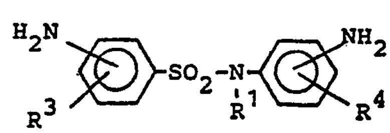

(IV)

in der

$R^1$, $R^3$ und $R^4$ wieder die oben angegebene Bedeutung haben.

Besonders bevorzugt sind jene Verbindungen der allgemeinen Formeln (I) bis (IV), bei denen die Sulfonamidgruppen in m- und/oder p-Stellung zu den Aminogruppen stehen.

Die Herstellung der zum Teil neuen Sulfonamidgruppen aufweisenden aromatischen Diamine kann nach an sich bekannten Verfahren erfolgen. So erhält man z. B. Diamine der allgemeinen Formel (I), indem man eine entsprechende Dinitrobenzolsulfonsäure oder deren Salz der Formel

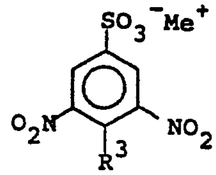

($Me^+$ = Metallkation) in das Sulfonsäurehalogenid überführt, dieses mit dem entsprechenden sekundären Amin der Formel

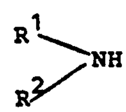

oder deren Hydrochlorid umsetzt und anschließend die Nitrogruppen in an sich bekannter Weise, z. B. katalytisch, hydriert.

Verbindungen der Formel (II) werden z. B. erhalten durch Umsetzung von Sulfonylchlorid mit dem entsprechenden Nitroanilin und anschließende an sich bekannte Hydrierung der Nitrogruppen zu Aminogruppen.

Verbindungen der Formel (III) werden erhalten durch Umsetzung des entsprechenden Nitrobenzolsulfochlorids mit einem Diamin, wie z. B. N,N'-Dialkylethylendiamin oder Piperidin. Anschließend folgt wiederum eine katalytische Hydrierung der Nitrogruppen zu den Aminogruppen.

Verbindungen der Formel (IV) werden erhalten durch Umsetzung des entsprechenden Nitrobenzolsulfochlorids mit einem Nitroanilin. Anschließend folgt eine katalytische Hydrierung der Nitrogruppen zu den Aminogruppen.

Für das erfindungsgemäße Verfahren geeignete gegenüber Isocyanaten reaktive Wasserstoffatome (Hydroxyl- und/oder Amino- und/oder Thiol- und/oder Carboxylgruppen) aufweisende Verbindungen haben ein Molekulargewicht von etwa 400 bis 10 000, vorzugsweise 600 bis 6 000. Es handelt sich dabei bevorzugt um mindestens zwei, vorzugsweise 2 bis 4, Hydroxylgruppen aufweisende Polyester, Polyether, Polythioether, Polyacetale, Polycarbonate und Polyesteramide, wie sie für die Herstellung von homogenen und von zellförmigen Polyurethanen an sich bekannt sind.

Die in Frage kommenden Hydroxylgruppen aufweisenden Polyester sind z. B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z. B. durch Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z. B. Äthylenglykol, Propylenglykol-(1,2) und-(1,3), Butylenglykol-(1,4) und -(2,3), Hexandhol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Formit, Methylglykosid, ferner Diäthylenglykol, Triäthylenglykol, Tetraäthylenglykol und höhere Polyäthylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z. B. ε-Caprolacton, oder aus Hydroxycarbonsäuren, z. B. ω-Hydroxycapronsäure, sind einsetzbar.

Auch die erfindungsgemäß in Frage kommenden, mindestens zwei, in der Regel zwei bis acht,

vorzugsweise zwei bis drei, Hydroxylgruppen aufweisenden Polyäther sind solche der an sich bekannten Art und werden z. B. durch Polymerisation von Epoxiden wie Äthylenoxid, Propylenoxid, Butylenoxid, Tetrahydrofuran, Styroloxid oder Epichlorhydrin mit sich selbst, z. B. in Gegenwart von Lewis-Katalysatoren wie $BF_3$, oder durch Anlagerung dieser Epoxide, vorzugsweise von Äthylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z. B. Äthylenglykol, Propylenglykol-(1,3) oder -(1,2), Trimethylolpropan, Glycerin, Sorbit, 4,4'-Dihydroxy-diphenylpropan, Anilin, Äthanolamin oder Äthylendiamin hergestellt. Auch Sucrosepolyäther, wie sie z. B. in den DE-Auslegeschriften 1 176 358 und 1 064 938 beschrieben werden, sowie auf Formit oder Formose gestartete Polyäther (DE-Offenlegungsschriften 2 639 083 bzw. 2 737 951), kommen erfindungsgemäß in Frage. Vielfach sind solche Polyäther bevorzugt, die überwiegend (bis zu 90 Gew.-%, bezogen auf alle vorhandenen OH-Gruppen im Polyäther) primäre OH-Gruppen aufweisen. Auch OH-Gruppen aufweisende Polybutadiene sind erfindungsgemäß geeignet.

Unter den Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten z. B. um Polythiomischäther, Polythioätherester oder Polythioätheresteramide.

Als Polyacetale kommen z. B. die aus Glykolen, wie Diäthylenglykol, Triäthylenglykol, 4,4'-Dioxäthoxydiphenyldimethylmethan, Hexandiol und Formaldehyd herstellbaren Verbindungen in Frage. Auch durch Polymerisation cyclischer Acetale wie z. B. Trioxan (DE-Offenlegungsschrift 1 694 128) lassen sich erfindungsgemäß geeignete Polyacetale herstellen.

Als Hydroxylgruppen aufweisende Polycarbonate kommen solche der an sich bekannten Art in Betracht, die z. B. durch Umsetzung von Diolen wie Propandiol-(1,3), Butandiol-(1,4) und/oder Hexandiol-(1,6), Diäthylenglykol, Triäthylenglykol, Tetraäthylenglykol oder Thiodiglykol mit Diarylcarbonaten, z. B. Diphenylcarbonat, oder Phosgen hergestellt werden können (DE-Auslegeschriften 1 694 080, 1 915 908 und 2 221 751 ; DE-Offenlegungsschrift 2 605 024).

Zu den Polyesteramiden und Polyamiden zählen z. B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

Auch bereits Urethan- oder Harnstoffgruppen enthaltende Polyhydroxylverbindungen sowie gegebenenfalls modifizierte natürliche Polyole, wie Rizinusöl oder Kohlenhydrate, z. B. Stärke, sind verwendbar. Auch Anlagerungsprodukte von Alkylenoxiden an Phenol-Formaldehyd-Harze oder auch an Harnstoff-Formaldehydharze sind erfindungsgemäß einsetzbar.

Die genannten Polyhydroxylverbindungen können vor ihrer Verwendung im Polyisocyanat-Polyadditionsverfahren noch in der verschiedensten Weise modifiert werden : So läßt sich gemäß DE-Offenlegungsschriften 2 210 839 (US-Patentschrift 3 849 515) und 2 544 195 ein Gemisch aus verschiedenen Polyhydroxylverbindungen (z. B. aus einem Polyäther- und einem Polyesterpolyol) durch Verätherung in Gegenwart einer starken Säure zu einem höhermolekularen Polyol kondensieren, welches aus über Ätherbrücken verbundenen verschiedenen Segmenten aufgebaut ist. Es ist auch möglich, z. B. gemäß DE-Offenlegungsschrift 2 559 372 in die Polyhydroxylverbindungen Amidgruppen oder gemäß DE-Offenlegungsschrift 2 620 487 durch Umsetzung mit polyfunktionellen Cyansäureestern Triazingruppen einzuführen. Durch Umsetzung eines Polyols mit einer weniger als äquivalenten Menge eines Diisocyanatocarbodiimids und anschließende Reaktion der Carbodiimidgruppe mit einem Amin, Amid, Phosphit oder einer Carbonsäure erhält man Guanidin-, Phosphonoformamidin- bzw. Acylharnstoffgruppen aufweisende Polyhydroxylverbindungen (DE-Offenlegungsschriften 2 714 289, 2 714 292 und 2 714 293). Von besonderem Interesse ist es in manchen Fällen, die höhermolekularen Polyhydroxylverbindungen durch Reaktion mit Isatosäureanhydrid vollständig oder teilsweise in die entsprechenden Anthranilsäureester überzuführen, wie es in den DE-Offenlegungsschriften 2 019 432 und 2 619 840 bzw. den US-Patentschriften 3 808 250, 3 975 428 und 4 016 143 beschrieben ist. Man erhält auf diese Weise höhermolekulare Verbindungen mit endständigen aromatischen Aminogruppen.

Durch Umsetzung von NCO-Präpolymeren mit Hydroxylgruppen aufweisenden Enaminen, Aldiminen oder Ketiminen und anschließende Hydrolyse erhält man gemäß DE-Offenlegungsschrift 2 546 536 bzw. US-Patentschrifft 3 865 791 höhermolekulare, endständige Aminogruppen aufweisende Verbindungen. Weitere Herstellungsverfahren für höhermolekulare Verbindungen mit endständigen Aminogruppen oder Hydrazidgruppen werden in der DE-Offenlegungsschrift 1 694 152 (US-Patentschrift 3 625 871) beschrieben.

Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z. B. erhalten, wenn man Polyadditionsreaktionen (z. B. Umsetzungen zwischen Polyisocyanaten und aminofunktionellen Verbindungen) bzw. Polykondensationsreaktionen (z. B. zwischen Formaldehyd und Phenolen und/oder Aminen) in situ in den oben genannten, Hydroxylgruppen aufweisenden Verbindungen ablaufen läßt. Derartige Verfahren sind beispielsweise in den DE-Auslegeschriften 1 168 075 und 1 260 142, sowie den DE-Offenlegungsschriften 2 324 134, 2 423 984, 2 512 385, 2 513 815, 2 550 796, 2 550 797, 2 550 833,

2 550 862, 2 633 293 und 2 639 254 beschrieben. Es ist aber auch möglich, gemäß US-Patentschrift 3 869 413 bzw. DE-Offenlegungsschrift 2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z. B. durch Polymerisation von Styrol und Acrylnitril in Gegenwart von Polyäthern (US-Patentschriften 3 383 351, 3 304 273, 3 523 093, 3 110 695 ; DE-Auslegeschrift 1 152 536) oder Polycarbonatpolyolen (DE-Patentschrift 1 769 795 ; US-Patentschrift 3 637 909) erhalten werden, sind für das erfindungsgemäße Verfahren geeignet. Bei Verwendung von Polyätherpolyolen, welche gemäß den DE-Offenlegungsschriften 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit. Polyhydroxylverbindungen, in welche durch radikalische Pfropfpolymerisation mittels ungesättigter Carbonsäuren sowie gegebenenfalls weiterer olefinisch ungesättigter Monomerer Carboxylgruppen eingeführt wurden (DE-Offenlegungsschriften 2 714 291, 2 739 620 und 2 654 746) können mit besonderem Vorteil in Kombination mit mineralischen Füllstoffen eingesetzt werden.

Bei der Verwendung von modifizierten Polyhydroxylverbindungen der oben genannten Art als Ausgangskomponente im Polyisocyanat-Polyadditionsverfahren entstehen in vielen Fällen Polyurethankunststoffe mit wesentlich verbesserten mechanischen Eigenschaften.

Vertreter der genannten erfindungsgemäß zu verwendenden Verbindungen sind z. B. in High Polymers, Vol. XVI, « Polyurethanes, Chemistry and Technology », verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z. B. auf den Seiten 45-71, beschrieben. Selbstverständlich können Mischungen der obengenannten Verbindungen mit mindestens zwei gegenüber Isocyanaten reaktionsfähigen Wasserstoffatomen mit einem Molekulargewicht von 400-10 000, z. B. Mischungen von Polyäthern und Polyestern, eingesetzt werden.

Von besonderem Vorteil ist es dabei in manchen Fällen, niedrigschmelzende und hochschmelzende Polyhydroxylverbindungen miteinander zu kombinieren (DE-Offenlegungsschrift 2 706 297).

Als erfindungsgemäß gegebenenfalls (bis zu 50 Mol-% der Summe der Komponenten C) und D)) einzusetzende Ausgangskomponenten kommen auch Verbindungen mit mindestens zwei gegenüber Isocyanaten reaktiven Gruppen und einem Molekulargewicht von 32-400 in Frage.

Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf.

Auch in diesem Fall können Mischungen von verschiedenen Verbindungen mit mindestens zwei gegenüber Isocyanaten reaktionsfähigen Wasserstoffatomen mit einem Molekulargewicht von 32 bis 400 verwendet werden.

Als Beispiele für derartige Verbindungen seien genannt :

Äthylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol (US-Patentschrift 3 723 392), Glyzerin, Trimethylolpropan, Hexantriol-(1,2,6), Trimethyloläthan, Pentaerythrit, Chinit, Mannit und Sorbit, Ricinusöl, Diäthylenglykol, Triäthylenglykol, Tetraäthylenglykol, höhere Polyäthylenglykole mit einem Molekulargewicht bis 400, Dipropylenglykol, höhere Polypropylenglykole mit einem Molekulargewicht bis 400, Dibutylenglykol, höhere Polybutylenglykole mit einem Molekulargewicht bis 400, 4,4'-Dihydroxy-diphenylpropan, Di-hydroxymethylhydrochinon, Äthanolamin, Diäthanolamin, N-Methyldiäthanolamin, Triäthanolamin und 3-Aminopropanol.

Als niedermolekulare Polyole kommen erfindungsgemäß auch die Gemische von Hydroxyaldehyden und Hydroxyketonen (« Formose ») bzw. die hieraus durch Reduktion erhaltenen mehrwertigen Alkohole (« Formit ») in Frage, wie sie bei der Selbstkondensation von Formaldehydhydrat in Gegenwart von Metallverbindungen als Katalysator und von zur Endiolbildung befähigten Verbindungen als Co-Katalysator entstehen (DE-Offenlegungsschriften 2 639 084, 2 714 084, 2 714 104, 2 721 186, 2 738 154 und 2 738 512). Um Kunststoffe mit verbesserter Flammwidrigkeit zu erhalten, setzt man diese Formosen mit Vorteil in Kombination mit Aminoplastbildnern und/oder Phosphiten ein (DE-Offenlegungsschriften 2 738 513 und 2 738 532). Auch Lösungen von Polyisocyanatpolyadditionsprodukten, insbesondere von ionische Gruppen aufweisenden Polyurethanharnstoffen und/oder von Polyhydrazodicarbonamiden, in niedermolekularen, mehrwertigen Alkoholen kommen erfindungsgemäß als Polyolkomponente in Betracht (DE-Offenlegungsschrift 2 638 759).

Als weitere erfindungsgemäß geeignete niedermolekulare Polyole vom Molekulargewicht bis 400 kommen auch Esterdiole der allgemeinen Formeln

$$HO-(CH_2)_x-CO-O-(CH_2)_y-OH$$

und

$$HO{-}(CH_2)_x{-}O{-}CO{-}R{-}CO{-}O{-}(CH_2)_x{-}OH$$

in denen

R einen Alkylenrest mit 1-10, vorzugsweise 2-6, C-Atomen bzw. einen Cycloalkylen- oder Arylenrest mit 6-10 C-Atomen

$x = 2$-$6$ und

$y = 3$-$5$

bedeuten, z. B. δ-Hydroxybutyl-ε-hydroxy-capronsäureester, ω-Hydroxyhexyl-γ-hydroxybuttersäureester, Adipinsäure-bis-(β-hydroxyäthyl)ester und Terephthalsäure-bis(β-hydroxyäthyl)ester ; Diolurethane der allgemeinen Formel

$$HO{-}(CH_2)_x{-}O{-}CO{-}NH{-}R'{-}NH{-}CO{-}O{-}(CH_2)_x{-}OH$$

in der

R' einen Alkylenrest mit 2-15, vorzugsweise 2-6, C-Atomen oder einen Cycloalkylen- oder Arylenrest mit 6-15 C-Atomen und

x eine Zahl zwischen 2 und 6

darstellen, z. B. 1,6-Hexamethylen-bis-(β-hydroxyäthylurethan) oder 4,4'-Diphenylmethan-bis-(δ-hydroxybutylurethan) ; sowie Diolharnstoffe der allgemeinen Formel

$$HO{-}(CH_2)_x{-}\underset{R'''}{N}{-}CO{-}NH{-}R''{-}NH{-}CO{-}\underset{R'''}{N}{-}(CH_2)_x{-}OH$$

in der

R'' einen Alkylenrest mit 2-15, vorzugsweise 2-9, C-Atomen oder einen Cycloalkylen- oder Arylenrest mit 6-15 C-Atomen,

R''' Wasserstoff oder eine Methylgruppe und

x die Zahlen 2 oder 3

bedeuten, z. B. 4,4'-Diphenylmethan-bis-(β-hydroxyäthylharnstoff) oder die Verbindung

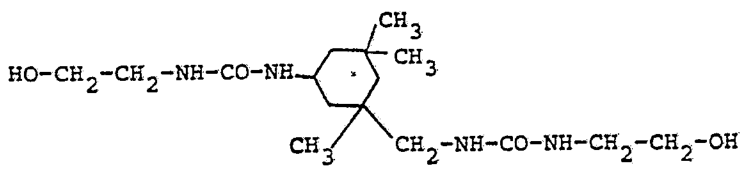

in Betracht.

Für manche Zwecke ist es vorteilhaft, Polyole einzusetzen, welche Sulfonat- und/oder Phosphonatgruppen enthalten (DE-Offenlegungsschrift 2 719 372), vorzugsweise das Addukt von Bisulfit an Butandiol-1,4 bzw. dessen Alkoxylierungsprodukte.

Erfindungsgemäß geeignete aliphatische Diamine sind beispielsweise Äthylendiamin, 1,4-Tetramethylendiamin, 1,11-Undecamethylendiamin, 1,12-Dodecamethylendiamin sowie deren Gemische, 1-Amino-3,3,5-trimethyl-5-aminomethylcyclohexan (« Isophorondiamin »), 2,4- und 2,6-Hexahydrotoluylendiamin sowie deren Gemische, Perhydro-2,4'- und 4,4'-diaminodiphenylmethan, p-Xylylendiamin, Bis-(3-aminopropyl)-methylamin, Diamino-perhydroanthrazene (DE-Offenlegungsschrift 2 638 731) und cycloaliphatische Triamine gemäß DE-Offenlegungsschrift 2 614 244. Auch Hydrazin und substituierte Hydrazine, z. B. Methylhydrazin, N,N'-Dimethylhydrazin und deren Homologe sowie Säuredihydrazide kommen erfindungsgemäß in Betracht, z. B. Carbodihydrazid, Oxalsäuredihydrazid, die Dihydrazide von Malonsäure, Bernsteinsäure, Glutarsäure, Adipinsäure, β-Methyladipinsäure, Sebazinsäure, Hydracrylsäure und Terephthalsäure ; Semicarbazido-alkylen-hydrazide wie z. B. β-Semicarbazidopropionsäurehydrazid (DE-Offenlegungsschrift 1 770 591), Semicarbazido-alkylencarbazinester wie z. B. 2-Semicarbazidoäthyl-carbazinester (DE-Offenlegungsschrift 1 918 504) oder auch Amino-semicarbazid-Verbindungen wie z. B. β-Aminoäthyl-semicarbazido-carbonat (DE-Offenlegungsschrift 1 902 931). Zur Steuerung ihrer Reaktivität können die Aminogruppen ganz oder teilweise durch Aldimin-bzw. Ketimin-Gruppen blockiert sein (US-Patentschrift 3 734 894 ; DE-Offenlegungsschrift 2 637 115).

Als Beispiele für zusätzliche aromatische Diamine seien Bisanthranilsäureester gemäß den DE-Offenlegungsschriften 2 040 644 und 2 160 590, 3,5- und 2,4-Diaminobenzoesäureester gemäß DE-Offenlegungsschrift 2 025 900, die in den DE-Offenlegungsschriften 1 803 635 (US-Patentschriften 3 681 290 und 3 736 350), 2 040 650 und 2 160 589 beschriebenen estergruppenhaltigen Diamine, die Äthergruppen aufweisenden Diamine gemäß DE-Offenlegungsschriften 1 770 525 und 1 809 172 (US-Patentschriften 3 654 364 und 3 736 295), gegebenenfalls in 5-Stellung substituierte 2-Halogen-1,3-Phenylendiamine (DE-Offenlegungsschriften 2 001 772, 2 025 896 und 2 065 869), 3,3'-Dichlor-4,4'-diamino-diphenylmethan, Toluylendiamin, 4,4'-Diaminodiphenylmethan, 4,4'-Diaminodiphenyldisulfide

(DE-Offenlegungsschrift 2 404 976), Diaminodiphenyldithioäther (DE-Offenlegungsschrift 2 509 404), durch Alkylthiogruppen substituierte aromatische Diamine (DE-Offenlegungsschrift 2 638 760), Diaminobenzolphosphonsäureester (DE-Offenlegungsschrift 2 459 491), Sulfonat- oder Carboxylatgruppen enthaltende aromatische Diamine (DE-Offenlegungsschrift 2 720 166) sowie die in der DE-Offenlegungsschrift 2 635 400 aufgeführten hochschmelzenden Diamine genannt. Beispiele für aliphatisch-aromatische Diamine sind die Aminoalkylthioaniline gemäß DE-Offenlegungsschrift 2 734 574.

Als Kettenverlängerungsmittel D) können erfindungsgemäß auch Verbindungen wie 1-Mercapto-3-aminopropan, gegebenenfalls substituierte Aminosäuren, z. B. Glycin, Alanin, Valin, Serin und Lysin sowie gegebenenfalls substituierte Dicarbonsäuren, beispielsweise Bernsteinsäure, Adipinsäure, Phthalsäure, 4-Hydroxyphthalsäure und 4-Aminophthalsäure verwendet werden.

Ferner können gegenüber Isocyanaten monofunktionelle Verbindungen in Anteilen von 0,01 bis 10 Gew.-%, bezogen auf Polyurethanfeststoff, als sogenannte Kettenabbrecher mitverwendet werden. Derartige monofunktionelle Verbindungen sind z. B. Monoamine wie Butyl- und Dibutylamin, Octylamin, Stearylamin, N-Methylstearylamin, Pyrrolidin, Piperidin und Cyclohexylamin, Monoalkohole wie Butanol, 2-Äthylhexanol, Octanol, Dodecanol, die verschiedenen Amylalkohole, Cyclohexanol, Äthylenglykolmonoäthyläther.

Als erfindungsgemäß einzusetzende Ausgangskomponenten A) kommen weiter aliphatische, cycloaliphatische, araliphatische, aromatische und heterocyclische Polyisocyanate in Betracht, wie sie z. B. von W. Siefken in Justus Liebigs Annalen der Chemie, 562, Seiten 75 bis 136, beschrieben werden, beispielsweise solche der Formel

$$Q(NCO)_n$$

in der

n = 2-4, vorzugsweise 2, und

Q einen aliphatischen Kohlenwasserstoffrest mit 2-18, vorzugsweise 6-10 C-Atomen, einen cycloaliphatischen Kohlenwasserstoffrest mit 4-15, vorzugsweise 5-10 C-Atomen, einen aromatischen Kohlenwasserstoffrest mit 6-15, vorzugsweise 6-13 C-Atomen, oder einen araliphatischen Kohlenwasserstoffrest mit 8-15, vorzugsweise 8-13 C-Atomen, bedeuten, z. B. Äthylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat.

Ferner kommen beispielsweise erfindungsgemäß in Frage: Triphenylmethan-4,4',4''-triisocyanat, Polyphenyl-polymethylenpolyisocyanate, wie sie durch Anilin-Formaldehyd-Kondensation und anschließende Phosgenierung erhalten und z. B. in den GB-Patentschriften 874 430 und 848 671 beschrieben werden, m- und p-Isocyanatophenylsulfonyl-isocyanate gemäß der US-Patentschrift 3 454 606, perchlorierte Arylpolyisocyanate, wie sie z. B. in der DE-Auslegeschrift 1 157 601 (US-Patentschrift 3 277 138) beschrieben werden, Carbodiimidgruppen aufweisende Polyisocyanate, wie sie in der DE-Patentschrift 1 092 007 (US-Patentschrift 3 152 162) sowie in den DE-Offenlegungsschriften 2 504 400, 2 537 685 und 2 552 350 beschrieben werden, Norbornan-Diisocyanate gemäß US-Patentschrift 3 492 330, Allophanatgruppen aufweisende Polyisocyanate, wie sie z. B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z. B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z. B. in der BE-Patentschrift 752 261 oder in den US-Patentschriften 3 394 164 und 3 644 457 beschrieben werden, acylierte Harnstoffgruppen aufweisende Polyisocyanate gemäß der DE-Patentschrift 1 230 778, Biuretgruppen aufweisende Polyisocyanate, wie sie z. B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z. B. in der US-Patentschrift 3 654 106 beschrieben werden, Estergruppen aufweisende Polyisocyanate, wie sie z. B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäß der DE-Patentschrift 1 072 385 und polymere Fettsäureester enthaltende Polyisocyanate gemäß der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen Polyisocyanate, z. B. das 2,4- und 2,6-Toluylendiisocyanat sowie beliebige Gemische dieser Isomeren (« TDI »), Polyphenylpolymethylen-polyisocyanate, wie sie durch Anilin-Formaldehyd-Kondensation und anschließende Phos-

genierung hergestellt werden (« rohes MDI ») und Carbodiimidgruppen, Urethangruppen, Allophanatgruppen, Isocyanuratgruppen, Harnstoffgruppen oder Biuretgruppen aufweisenden Polyisocyanate (« modifizierte Polyisocyanate »), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

Beim erfindungsgemäßen Verfahren können gegebenenfalls u. a. die folgenden Hilfs- und Zusatzmittel mitverwendet werden :

a) Wasser und/oder leicht flüchtige anorganische oder organische Substanzen als Treibmittel. Als organische Treibmittel kommen z. B. Aceton, Äthylacetat, halogensubstituierte Alkane wie Methylenchlorid, Chloroform, Äthylidenchlorid, Vinylidenchlorid, Monofluortrichlormethan, Chlordifluormethan, Dichlordifluormethan, ferner Butan, Hexan, Heptan oder Diäthyläther, als anorganische Treibmittel z. B. Luft, $CO_2$ oder $N_2O$, in Frage. Eine Treibwirkung kann auch durch Zusatz von bei Temperaturen über Raumtemperatur unter Abspaltung von Gasen, beispielsweise von Stickstoff, sich zersetzenden Verbindungen, z. B. Azoverbindungen wie Azodicarbonamid oder Azoisobuttersäurenitril, erzielt werden. Weitere Beispiele für Treibmittel sowie Einzelheiten über die Verwendung von Treibmitteln sind im Kunstoff-Handbuch, Band VII, herausgegeben von Vieweg und Höchtlen, Carl-Hanser-Verlag, München 1966, z. B. auf den Seiten 108 und 109, 453 bis 455 und 507 bis 510 beschrieben.

b) Katalysatoren der an sich bekannten Art, z. B. tertiäre Amine, wie Triäthylamin, Tributylamin, N-Methyl-morpholin, N-Äthyl-morpholin, N,N,N',N'-Tetramethyl-äthylendiamin, Pentamethyl-diäthylentriamin und höhere Homologe (DE-Offenlegungsschriften 2 624 527 und 2 624 528), 1,4-Diazabicyclo-(2,2,2)-octan, N-Methyl-N'-dimethylaminoäthylpiperazin, Bis-(dimethylaminoalkyl)-piperazine (DE-Offenlegungsschrift 2 636 787), N,N-Dimethylbenzylamin, N,N-Dimethylcyclohexylamin, N,N-Diäthylbenzylamin, Bis-(N,N-diäthylaminoäthyl)-adipat, N,N,N',N'-Tetramethyl-1,3-butandiamin, N,N-Dimethyl-β-phenyläthylamin, 1,2-Dimethylimidazol, 2-Methylimidazol, monocyclische und bicyclische Amidine (DE-Offenlegungsschrift 1 720 633), Bis-(dialkylamino) alkyl-äther (US-Patentschrift 3 330 782, DE-Auslegeschrift 1 030 558, DE-Offenlegungsschriften 1 804 361 und 2 618 280) sowie Amidgruppen (vorzugsweise Formamidgruppen) aufweisende tertiäre Amine gemäß den DE-Offenlegungsschriften 2 523 633 und 2 732 292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methyläthylketon oder Cyclohexanon und Phenolen, wie Phenol, Nonylphenol oder Bisphenol, in Frage.

Gegenüber Isocyanatgruppen aktive Wasserstoffatome aufweisende tertiäre Amine als Katalysator sind z. B. Triäthanolamin, Triisopropanolamin, N-Methyl-diäthanolamin, N-Äthyl-diäthanolamin, N,N-Dimethyläthanolamin, deren Umsetzungsprodukte mit Alkylenoxiden wie Propylenoxid und/oder Äthylenoxid sowie sekundär-tertiäre Amine gemäß DE-Offenlegungsschrift 2 732 292.

Als Katalysatoren kommen ferner Silaamine mit Kohlenstoff-Silizium-Bindungen, wie sie z. B. in der DE-Patentschrift 1 229 290 (entsprechend der US-Patentschrift 3 620 984) beschrieben sind, in Frage, z. B. 2,2,4-Trimethyl-2-silamorpholin und 1,3-Diäthylaminomethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-Offenlegungsschrift 1 769 043).

Die Reaktion zwischen NCO-Gruppen und Zerewitinoffaktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Assoziate und ihre katalytische Wirkung werden in den DE-Offenlegungsschriften 2 062 288, 2 062 289, 2 117 576 (US-Patentschrift 3 758 444), 2 129 198, 2 330 175 und 2 330 211 beschrieben.

Erfindungsgemäß können auch organische Metallverbindungen, insbesondere organische Zinnverbindungen, als Katalysatoren, verwendet werden. Als organische Zinnverbindungen kommen neben schwefelhaltigen Verbindungen wie Di-n-octyl-zinn-mercaptid (DE-Auslegeschrift 1 769 367 ; US-Patentschrift 3 645 927) vorzugsweise Zinn(II)-salze von Carbonsäuren wie Zinn(II)-acetat, Zinn(II)-octoat, Zinn(II)-äthylhexoat und Zinn(II)-laurat und die Zinn(IV)-Verbindungen, z. B. Dibutylzinnoxid, Dibutylzinndichlorid, Dibutylzinndiacetat, Dibutylzinndilaurat, Dibutylzinnmaleat oder Dioctylzinndiacetat in Betracht.

Selbstverständlich können alle obengenannten Katalysatoren als Gemische eingesetzt werden. Von besonderem Interesse sind dabei Kombinationen aus organischen Metallverbindungen und Amidinen, Aminopyridinen oder Hydrazinopyridinen (DE-Offenlegungsschriften 2 434 185, 2 601 082 und 2 603 834).

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z. B. auf den Seiten 96 bis 102 beschrieben.

Die Katalysatoren werden in der Regel in einer Menge zwischen etwa 0,001 und 10 Gew.-%, bezogen auf die Gesamtmenge an Verbindungen mit mindestens zwei gegenüber Isocyanaten reaktionsfähigen Wasserstoffatomen, eingesetzt.

c) Oberflächenaktive Zusatzstoffe, wie Emulgatoren und Schaumstabilisatoren. Als Emulgatoren kommen z. B. die Natriumsalze von Ricinusöl-sulfonaten oder Salze von Fettsäuren mit Aminen wie ölsaures Diäthylamin oder stearinsaures Diäthanolamin infrage. Auch Alkali- oder Ammoniumsalze von Sulfonsäuren wie etwa von Dodecylbenzolsulfonsäure oder Dinaphtylmethandisulfonsäure oder von

Fettsäuren wie Ricinolsäure oder von polymeren Fettsäuren können als oberflächenaktive Zusatzstoffe mitverwendet werden.

Als Schaumstabilisatoren kommen vor allem Polyäthersiloxane, speziell wasserlösliche Vertreter, infrage. Diese Verbindungen sind im allgemeinen so aufgebaut, daß ein Copolymerisat aus Äthylenoxid und Propylenoxid mit einem Polydimethylsiloxanrest verbunden ist. Derartige Schaumstabilisatoren sind z. B. in den US-Patentschriften 2 834 748, 2 917 480 und 3 629 308 beschrieben. Von besonderem Interesse sind vielfach über Allophanatgruppen verzweigte Polysiloxan-Polyoxyalkylen-Copolymere gemäß DE-Offenlegungsschrift 2 558 523.

d) Reaktionsverzögerer, z. B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z. B. Trischloräthylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z. B. auf den Seiten 103 bis 113 beschrieben.

Durchführung des erfindungsgemäßen Verfahrens :

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z. B. solcher, die in der US-Patentschrift 2 764 565 beschrieben werden. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z. B. auf den Seiten 121 bis 205 beschrieben.

Bei der Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z. B. Aluminium, oder Kunststott, z. B. Epoxidharz, infrage. In der Form schäumt das schäumfähige Reaktionsgemisch auf und bildet den Formkörper. Die Formverschäumung kann dabei so durchgeführt werden, daß das Formteil an seiner Oberfläche Zellstruktur aufweist, sie kann aber auch so durchgeführt werden, daß das Formteil eine kompakte Haut und einen zelligen Kern aufweist. Erfindungsgemäß kann man in diesem Zusammenhang so vorgehen, daß man in die Form so viel schäumfähiges Reaktionsgemisch einträgt, daß der gebildete Schaumstoff die Form gerade ausfüllt. Man kann aber auch so arbeiten, daß man mehr schäumfähiges Reaktionsgemisch in die Form einträgt, als zur Ausfüllung des Forminneren mit Schaumstoff notwendig ist. Im letztgenannten Fall wird somit unter « overcharging » gearbeitet ; eine derartige Verfahrensweise ist z. B. aus den US-Patentschriften 3 178 490 und 3 182 104 bekannt.

Die Mengen an Reaktionskomponenten werden im erfindungsgemäßen Verfahren in der Regel so gewählt, daß das Äquivalentverhältnis von Polyisocyanaten A) zur Summe der Verbindungen mit gegenüber Isocyanaten reaktionsfähigen Gruppen — abhängig vom jeweils angewendeten Verarbeitungsverfahren — in der Regel zwischen 0,7 : 1 und 1,5 : 1 liegt, vorzugsweise zwischen 0,90 : 1 und 1,15 : 1. Der Prozentgehalt an NCO im Prepolymer, falls über die Prepolymerstufe gearbeitet wird, kann 1,8 bis 6 Gew.-% betragen. Das Molverhältnis von reaktionsfähigem Wasserstoff des Kettenverlängerers C) + D) zu reaktionsfähigen Gruppen der Komponente B) kann in weiten Grenzen variieren, vorzugsweise soll es zwischen 0,4 : 1 und 1,5 : 1 liegen, wobei weiche bis harte Polyurethan-Typen reultieren. Neben den erfindungsgemäß zu verwendenden Diaminen C) können, wie schon erwähnt, als zusätzlicher Kettenverlängerer D) anteilsweise z. B. auch weitere Diamine oder auch Diole eingesetzt werden. Der Molenbruch des erfindungsgemäßen Amins C) in der Kettenverlängererkomponente soll aber zwischen 1 und 0,5 liegen, vorzugsweise zwischen 1 und 0,8.

Die Umsetzung zwischen Polyisocyanat (bzw. NCO-Prepolymer) und Komponente C) erfolgt vorzugsweise in einem Temperaturbereich von 70 bis 150 °C.

Die Durchführung des erfindungsgemäßen Verfahrens kann auf verschiedene Weise erfolgen. So kann man z. B. die Verbindung B) mit mindestens zwei reaktiven Wasserstoffatomen und einem Molekulargewicht von 400-10 000 mit einem Überschuß an Diisocyanat zur Reaktion bringen und nach der Zugabe des Kettenverlängerungsmittels die Mischung in Formen gießen. Nach mehrstündigem Nachheizen ist ein hochwertiger elastischer Polyurethankunststoff entstanden.

Eine weitere Ausführungsform besteht darin, daß man die Komponente B) im Gemisch mit dem Kettenverlängerungsmittel mit einem Überschuß an Diisocyanat umsetzt und das Reaktionsprodukt nach der Granulierung in der Hitze unter Druck verformt. Je nach den angewendeten Mengenverhältnissen der Reaktionsteilnehmer können hierbei Polyurethankunststoffe mit verschiedenartigen Härten und unterschiedlicher Elastizität erhalten werden. Man kann auf diese Weise auch Kunststoffe herstellen, die sich wie Thermoplaste verarbeiten lassen. Eine weitere Verfahrensvariante besteht darin, daß man die höhermolekulare Verbindung B) im Gemisch mit dem Kettenverlängerungsmittel mit einem Unterschuß

an Diisocyanat umsetzt, wobei ein walzbares Fell erhalten wird, das anschließend, z. B. durch Vernetzung mit weiterem Diisocyanat, in einen kautschukelastischen Polyurethankunststoff übergeführt werden kann.

Des weiteren besteht die Möglichkeit, die Polyisocyanate mit den aromatischen Diaminen in heterogener Phase umzusetzen, wie es z. B. in der DE-AS 1 122 699 oder der DE-OS 2 635 400 beschrieben ist. In diesem Fall werden die Diamine vorzugsweise in Form eines Pulvers mit einer durchschnittlichen Korngröße von 1 bis 50 µm eingesetzt.

Erfindungsgemäß hergestellte Elastomere finden vielseitige Anwendung, z. B. für mechanisch stark beanspruchte Formkörper, wie Reifen, Rollen, Keilriemen oder Dichtungen, die thermisch oder chemisch stark beansprucht werden, für Heißwasserrohre oder Motoren oder zur Herstellung von Folien, Textulbeschichtungen und Polyurethanpulvern.

Die Kettenverlängerung kann auch in Gegenwart der oben beschriebenen Treibmittel und Zusatzstoffe, bevorzugt in geschlosssenen Formen, ausgeführt werden, wobei Schäume mit zelligem Kern und kompakter Oberfläche gebildet werden.

Die nach dem erfindungsgemäßen Verfahren zugänglichen elastischen und halbelastischen Schaumstoffe werden beispielsweise als Polstermaterialien, Matratzen und Verpackungsmaterial verwendet. Die Schaumstoffe können dabei entweder nach dem Formverschäumungsverfahren hergestellt werden oder durch Konfektionierung aus blockgeschäumtem Material erhalten werden.

Die folgenden Beispiele erläutern das erfindungsgemäße Verfahren. Wo nicht anders vermerkt, sind Mengenangaben als Gewichtsteile bzw. Gewichtsprozente zu verstehen.

Die in den Beispielen verwendeten sulfonamidgruppenhaltigen Diamine wurden in folgender Weise hergestellt :

1) 2,6-Diaminotoluol-4-(N,N-di-n-butyl-sulfonamid)

a) 182 g trockenes Na-Salz der 2,6-Dinitrotoluol-4-sulfonsäure werden mit 225 ml Thionylchlorid und 5,1 ml Dimethylformamid 30 Minuten unter Rückfluß erhitzt. Danach wird das Thionylchlorid abdestilliert (Reste werden durch das Hindurchleiten eines Stickstoffstromes entfernt) und der Rückstand in Eiswasser gegeben. Das ausfallende Sulfochlorid wird abfiltriert, mehrmals mit Wasser gewaschen und im Vakuumtrockenschrank bei 50 °C getrocknet. Hellbraunes Pulver. Fp : 126-128 °C

Ausbeute : 85 % der Theorie.

b) Zu einer Suspension von 30,9 g (0,11 Mol) 2,6-Dinitrotoluol-4-sulfochlorid in 300 ml Dioxan wird bei ca. 10 °C eine Lösung von 12,9 g (0,1 Mol) Dibutylamin und 11,1 g (0,11 Mol) Triethylamin in 100 ml Dioxan gegeben. Die Reaktionsmischung wird 2 Stunden bei 50 °C gerührt. Der graue Niederschlag (Triethylaminhydrochlorid ; Fp : 253-255 °C) wird abfiltriert und mit Dioxan gewaschen. Die Dioxanphasen werden am Rotationsverdampfer zur Trockne eingeengt.

Hellbraunes Pulver (Fp : 85-87 °C)

Ausbeute : 98 % der Theorie

Reinigung durch Umkristallisieren aus Methanol (Fp : 94-95 °C).

Elementaranalyse :

| | ber. | gef. |
|---|---|---|
| C | 48,26 | 48,2 |
| H | 6,17 | 6,3 |
| N | 11,26 | 11,2 |
| O | 25,74 | |
| S | 8,58 | |

c) 329 g der Dinitroverbindung werden in 2 l Ethanol gelöst und in Gegenwart von 60 g Raney-Nickel unter Druck hydriert. Das Raney-Nickel wird abfiltriert und die Lösung im Vakuum eingeengt. Der Rückstand wird bei 60 °C im Vakuumtrockenschrank getrocknet.

Grau-braunes Pulver. Fp : 121-123 °C

Rohausbeute : 96 %

Durch zweimaliges Erhitzen des Produktes mit Ethanol/Wasser (1 : 1) werden die Verunreinigungen herausgelöst.

Weißes Pulver. Fp : 124 °C

Reinausbeute bei der Hydrierung : 73 %

(Siehe die Fortsetzung Seite 12 f.)

Elementaranalyse :

| | ber. | gef. |
|---|---|---|
| C | 57,51 | 57,6 |
| H | 8,63 | 8,8 |
| N | 13,42 | 13,4 |
| O | 10,22 | |
| S | 10,22 | 10,2 |

In analoger Weise wurden auch die übrigen in den Beispielen 6 und 7 verwendeten 2,6-Diaminotoluol-4-sulfonamide und 2,4-Diaminobenzol-(N-phenyl-N-ethyl)-sulfonamid hergestellt.

2) 3,5-Diamino-4-chlorbenzol-(N,N-di-n-butyl)-sulfonamid

Zu 250 ml Chlorsulfonsäure werden bei Raumtemperatur innerhalb von 45 Minuten 141 g trocknes K-Salz der 3,5-Dinitro-4-chlorbenzolsulfonsäure gegeben. Anschließend wird 1,5 Stunden bei 100 °C gerührt. Das abgekühlte Reaktionsgemisch wird auf ca. 3 l Eiswasser gegeben, der graue Niederschlag wird abfiltriert, mehrmals mit Wasser gewaschen und im Vakuumtrockenschrank bei 50 °C getrocknet.
Hellgraues Pulver. Fp : 83-85 °C
Ausbeute : 65 % der Theorie.
Das so erhaltene 3,5-Dinitro-4-chlorbenzolsulfochlorid wird in Analogie zu der oben unter 1 b) und 1 c) beschriebenen Verfahrensweise weiter umgesetzt.

3) Piperazin-N,N'-bis-(3-aminophenylsulfonyl)

a) Zu 97 g (0,5 Mol) Piperazinhexahydrat in
500 ml 2,5 N KOH und
500 ml $H_2O$ werden bei Raumtemperatur
245 g (1,1 Mol) 3-Nitrobenzolsulfonsäurechlorid, gelöst in
300 ml Aceton unter Umrühren zugetropft (exotherme Reaktion). Dann wird 2 Stunden bei 50 °C gerührt. Das ausgefallene Sulfonamid wird abgesaugt, mit Wasser gewaschen und im Vakuumtrockenschrank bei 50 °C getrocknet.
Weißes Pulver, DC-rein
Fp : 257-259 °C.
Ausbeute : 194 g = 85 % der Theorie

b) 200 g der Dinitroverbindung werden in 1500 ml DMF gelöst und in Gegenwart von 30 g Raney-Nickel unter Druck hydriert.
Nach der Hydrierung wird das Raney-Nickel abgesaugt, mehrmals mit DMF gewaschen und das Diamin durch Versetzen der vereinigten DMF-Lösungen mit dest. $H_2O$ ausgefällt. Das Diamin wird abgesaugt, mit Wasser gewaschen und im Vakuumtrockenschrank bei 50 °C getrocknet.
Weißes Pulver. DC-rein. Fp : 293 °C
Ausbeute : 157 g = 93 % der Theorie.
In analoger Weise wurde das in den Beispielen 6 und 7 verwendete N,N'-Dimethyl-N,N'-bis-(3-aminophenylsulfonyl)-ethylendiamin hergestellt.

## Beispiel 1

200 g eines aus Adipinsäure und Ethylenglykol erhaltenen Polyesters (MG = 2 000 ; OH-Zahl = 56) werden mit 360 g 2,4-Diisocyanatotoluol auf 70-80 °C erwärmt und bis zu einem NCO-Gehalt von 3,7-3,8 % dieser Temperatur gehalten. 500 g des NCO-Präpolymeren werden bei 80 °C kurz im Wasserstrahlvakuum entgast und innerhalb von 30 Sek. mit 65,5 g geschmolzenem 2,6-Diaminotoluol-4-(N,N-di-n-butyl)-sulfonamid (Fp. = 124 °C) innig vermischt. Der Reaktionsansatz wird in eine auf 100 °C erwärmte Form gegossen und nach der Entformung noch 24 Stunden bei 110 °C getempert. Die Gießzeit der Mischung beträgt 1,5-2 Minuten. Nach ca. 5 Minuten kann der Probekörper entformt werden. Die mechanischen Eigenschaften des Elastomers sind in Tabelle 1 (vgl. Beispiel 3) angegeben.

## Beispiel 2 (Vergleichsversuch)

Wird das in Beispiel 1 genannte 2,6-Diaminotoluol-4-(N,N-di-butyl)-sulfonamid durch 55 g 2,6-Diaminotoluol-4-carbonsäure-isobutylester ersetzt, so ist infolge der raschen Vernetzungsreaktion eine Verarbeitung des Gießansatzes nicht möglich. Bereits während des Einrührens des Vernetzers tritt Verquallung des Reaktionsansatzes ein.

Beispiel 3 (Vergleichsversuch)

Bei Verwendung von 50 g des besonders träge reagierenden 3,5-Diamino-4-chlor-benzoesäureisobutylesters anstelle von 2,6-Diaminotoluol-4-(N,N-di-n-butyl)-sulfonamid bzw. 2,6-Diaminotoluol-4-carbonsäure-isobutylester gemäß Beispiel 1 bzw. 2 kann in der oben angegebenen Weise ein Probekörper hergestellt werden. Die Gießzeit des Reaktionsansatzes beträgt hierbei ca. 8 Min. und nach weiteren 10 Min. kann entformt werden. Nach 24-stündiger Temperung bei 110 °C erhält man ein Elastomer mit den in Tabelle 1 angegebenen mechanischen Eigenschaften :

Tabelle 1

| | | Beispiel 1 | Beispiel 3 |
|---|---|---|---|
| Härte (Shore A) DIN 53 505 | | 82 | 87 |
| Zugfestigkeit (mPa) DIN 53 504 | | 60 | 65 |
| Bruchdehnung (%) DIN 53 504 | | 680 | 680 |
| Belastung (mPa) DIN 53 504 | bei 100 % | 4,8 | 5,9 |
| | bei 300 % | 8,3 | 9,5 |
| Elastizität (%) DIN 53 512 | | 41 | 36 |
| Weiterreißfestigkeit KN/m DIN 53 515 | | 85 | 65 |

Trotz geringerer Härte zeigt das erfindungsgemäß mit 2,6-Diaminotoluol-4-(N,N-di-n-butyl)-sulfonamid hergestellte Elastomer eine deutlich verbesserte Weiterreißfestigkeit.

Beispiel 4

2 000 g eines linearen Polypropylenglykolethers (MG = 2 000 ; OH-Zahl = 56) werden mit 350 g 2,4-Diisocyanatotoluol auf 70-80 °C erwärmt und bis zu einem NCO-Gehalt von 3,6-3,7 % bei dieser Temperatur gehalten.

500 g des NCO-Präpolymeren werden bei 80 °C kurz entgast und innerhalb von 30 Sek. mit 65 g geschmolzenem 2,6-Diaminotoluol-4-(N,N-di-n-butyl)-sulfonamid vermischt. Nach einer Gießzeit von 5 Min. kann der Probekörper nach 20 Min. entfernt werden. Nach 24-stündiger Temperung bei 110 °C erhält man ein Elastomer mit den in Tabelle 2 angegebenen Eigenschaften.

Beispiel 5 (Vergleichsversuch)

Wird das in Beispiel 4 genannte 2,6-Diaminotoluol-4-(N,N-di-n-butyl)-sulfonamid durch 55 g 2,6-Diaminotoluol-4-carbonsäureisobutylester ersetzt, so erhält man nach einer Gießzeit von ca. 1 Min. und einer Entformungszeit von ca. 5 Min. einen Probekörper, der nach Temperung die in Tabelle 2 angegebenen mechanischen Eigenschaften aufweist :

(Siehe die Tabelle Seite 14 f.)

Tabelle 2

| | Beispiel 4 | Beispiel 5 |
|---|---|---|
| Härte (Shore A) | 66 | 80 |
| Zugfestigkeit (mPa) | 11,5 | 16,0 |
| Bruchdehnung (%) | 950 | 900 |
| Belastung (mPa) bei 100 % | 3,5 | 6,1 |
| bei 300 % | 4,5 | 6,3 |
| Elastizität (%) | 58 | 64 |
| Weiterreißfestigkeit (KN/m) | 75 | 80 |

Die relativ lange Gießzeit des mit 2,6-Diaminotoluol-4-(N,N-di-n-butyl)-sulfonamid (Beispiel 4) vernetzten Reaktionsansatzes erlaubt eine einfache Verarbeitung im Handgießverfahren. Der in Beispiel 5 verwendete 2,6-Diaminotoluol-4-carbonsäureisobutylester reagiert dagegen für das Gießen komplizierten technischer Artikel bereits zu rasch. Man erhält hierbei nicht ganz homogene Formteile. Das deutlich weichere Elastomer von Beispiel 4 zeigt noch einen ausgezeichneten Wert für die Weiterreißfestigkeit.

Beispiel 6

200 g des im Beispiel 1 beschriebenen NCO-Präpolymeren vom NCO-Gehalt 3,7 % werden in der dort angegebenen Weise mit den unten stehenden Diamino-aryl-sulfonamiden umgesetzt. Soweit bestimmt, werden in der nachfolgenden Tabelle 3 Gieß- und Entformungszeiten sowie die Härte der entstandenen Elastomeren angegeben. Hochschmelzende Diamino-aryl-sulfonamide werden in der Regel in fein verteilter Form dem NCO-Präpolymer zugesetzt und in heterogener Phase verarbeitet. Hierbei ist die Vernetzungstemperatur von 80-100 °C meist deutlich unterhalb des Schmelzpunktes der Sulfonamide. Folgende Diamino-aryl-sulfonamide wurden als Vernetzer verwendet :

1. 2,6-Diaminotoluol-4-(N-methyl-N-octadecyl)-sulfonamid
2. 2,4-Diaminobenzol-(N-phenyl-N-ethyl)-sulfonamid
3. N,N'-Dimethyl-N,N'-bis-(3-aminophenylsulfonyl)-ethylen-diamin
4. Piperazin-N,N'-bis-(3-aminophenylsulfonyl)

Tabelle 3

| Vernetzer | Fp. (°C) | Menge (g) | Gießzeit (Min.) | Entformbarkeit (Min.) | Härte Shore A |
|---|---|---|---|---|---|
| 1 | 79 | 42 | 2,5 | 5 | 65 |
| 2 | 125 | 26,2 | 3,5 | 10 | 50 |
| 3 | 145 | 35,8 | 15 | 30 | 50 |
| 4 | 280 | 35,6 | - | 2 Std. | 65 |

Beispiel 7

Wird das in Beispiel 6 verwendete NCO-Präpolymer auf Basis eines Adipinsäurepolyesters durch 200 g des im Beispiel 5 genannten NCO-Präpolymeren auf Basis eines Polypropylenglykolethers ersetzt, so erhält man mit den unten stehenden Diamino-aryl-sulfonsäureamiden in der angegebenen Weise Elastomere mit den in Tabelle 4 angeführten Shore A-Härten.

1. 2,6-Diaminotoluol-4-(N-methyl-N-octadecyl)-sulfonamid
2. N,N'-Dimethyl-N,N'-bis-(3-aminophenylsulfonyl)-ethylendiamin
3. Piperazin-N,N'-bis-(3-aminophenylsulfonyl)
4. 2,6-Diaminotoluol-4-(N,N-di-isobutyl)-sulfonamid
5. 2,6-Diaminochlorbenzol-4-(N,N-di-n-butyl)-sulfonamid

Tabelle 4

| Vernetzer | Fp (°C) | Menge (g) | Gießzeit (Min.) | Entformbarkeit | Härte Shore A |
|---|---|---|---|---|---|
| 1 | 79 | 42 | 30 | > 1 Std. | 35 |
| 2 | 145 | 35,8 | 30 | - | 25 |
| 3 | 280 | 35,6 | - | > 2 Std. | 30 |
| 4 | 155 | 24 | 30 | ~ 1 Std. | 70 |
| 5 | 158 | 25,2 | 25 | 45 Min. | 40 |

**Ansprüche**

1. Verfahren zur Herstellung von Polyurethanharnstoff-Elastomeren durch, gegebenenfalls stufenweise, Umsetzung von

A) Polyisocyanaten,

B) Verbindungen mit mindestens 2 gegenüber Isocyanaten reaktiven Wasserstoffatomen und einem Molekulargewicht von 400 bis 10 000,

C) ein- oder zweikernigen aromatischen Diaminen als Kettenverlängerungsmittel sowie gegebenenfalls

D) weiteren gegenüber Isocyanaten reaktiven Verbindungen mit einem Molekulargewicht von 32 bis 400 als zusätzlichen Kettenverlängerungsmitteln, gegebenenfalls in Gegenwart von

E) Aktivatoren, Treibmitteln und/oder weiteren an sich bekannten Hilfs- und Zusatzmitteln, dadurch gekennzeichnet, daß als Komponente C) Diamine eingesetzt werden, welche an mindestens einem ihrer aromatischen Ringe mindestens eine Sulfonamidgruppe als Substituenten enthalten, wobei Verbindungen der allgemeinen Formel

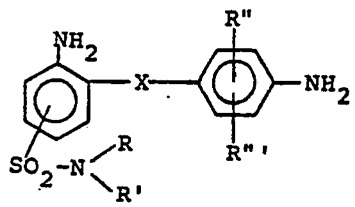

ausgenommen sind, in welcher

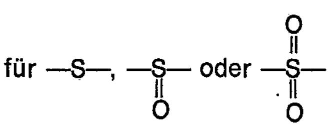
X für , oder steht,

R und R′ gleich oder verschieden sind und lineare oder verzweigte aliphatische Reste mit 1 bis 4 C-Atomen bedeuten und

R″ und R‴ gleich oder verschieden sind und Wasserstoff, einen Alkylrest, eine Alkoxy- oder eine Alkylmercaptogruppe mit 1 bis 4 C-Atomen darstellen.

2. Verfahren nach Anspruch 1, dadurch gekennzeichnet, daß als Komponente C) solche Diamine eingesetzt werden, bei welchen die Sulfonamidgruppen in m-und/oder p-Stellung zu den Aminogruppen stehen.

3. Verfahren nach Anspruch 1 und 2, dadurch gekennzeichnet, daß als Komponente C) Diamine der allgemeinen Formeln

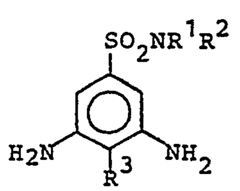
(I)

oder

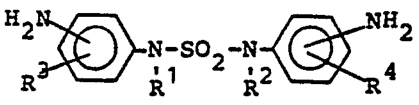

(II)

oder

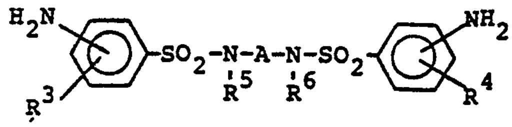

(III)

oder

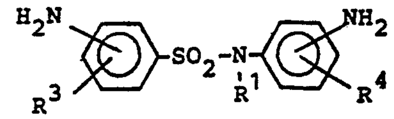

(IV)

eingesetzt werden, in welchen

$R^1$ und $R^2$ gleich oder verschieden sind und für Wasserstoff, einen gegebenenfalls verzweigten Alkylrest mit 1 bis 20 C-Atomen oder einen Aryl- oder Aralkylrest mit 6 bis 20 C-Atomen stehen,

$R^3$ und $R^4$ gleich oder verschieden sind und Wasserstoff, einen gegebenenfalls verzweigten Alkylrest mit 1 bis 6 C-Atomen, einen Alkoxyrest mit 1 bis 6 C-Atomen oder ein Halogenatom darstellen,

A eine gegebenenfalls verzweigte und/oder Heteroatome enthaltende Alkylenbrücke mit 2 bis 6 C-Atomen bedeutet und

$R^5$ und $R^6$ dieselbe Bedeutung wie $R^1$ und $R^2$ haben oder zusammen für eine gegebenenfalls verzweigte und/oder Heteroatome enthaltende Alkylenbrücke mit 1 bis 6 C-Atomen stehen.

4. Verfahren nach Anspruch 3, dadurch gekennzeichnet, daß Diamine eingesetzt werden, bei denen $R^2$, $R^5$ und $R^6$ für Alkylreste mit 1 bis 6 C-Atomen stehen.

5. Verfahren nach Anspruch 3 und 4, dadurch gekennzeichnet, daß Diamine der Formel (IV) eingesetzt werden, bei welchen $R^5$, $R^6$ und A zusammen einen Piperazinring bilden.

6. Verfahren nach Anspruch 3 und 4, dadurch gekennzeichnet, daß Diamine der Formel (I) eingesetzt werden, bei denen $R^3$ für Chlor oder eine Methylgruppe steht.

7. Verfahren nach Anspruch 3 bis 5, dadurch gekennzeichnet, daß Diamine der Formeln (II) bis (IV) eingesetzt werden, bei denen $R^3$ und $R^4$ für Wasserstoff stehen.

8. Verfahren nach Anspruch 1 bis 7, dadurch gekennzeichnet, daß man die aromatischen sulfonamidgruppenhaltigen Diamine in flüssigem bzw. geschmolzenem Zustand einem Isocyanatpräpolymeren aus den Komponenten A) und B) oder zusammen mit Komponente B) und gegebenenfalls D) dem Polyisocyanat A) zusetzt.

9. Verfahren nach Anspruch 1 bis 7, dadurch gekennzeichnet, daß die Polyisocyanate A) mit einer Suspension der aromatischen sulfonamidgruppenhaltigen Diamine C) in den Komponenten B) und gegebenenfalls D) in heterogener Phase bei Temperaturen ober- oder unterhalb des Schmelzpunktes der Komponente C) umgesetzt werden.

10. Verfahren nach Anspruch 9, dadurch gekennzeichnet, daß die aromatischen sulfonamidgruppenhaltigen Diamine in Form eines Pulvers mit einer durchschnittlichen Korngröße von 1 bis 50 μm eingesetzt werden.

## Claims

1. Process for the production of polyurethane urea elastomers by the reaction, which may be carried out stepwise, of

A) polyisocyanates,

B) compounds containing at least two isocyanate reactive hydrogen atoms and having a molecular weight of 400 to 10,000,

C) mononuclear or dinuclear aromatic diamines as chain lengthening agents, and optionally

D) other isocyanate reactive compounds having a molecular weight of 32 to 400 as additional chain lengthening agents, optionally in the presence of

E) activators, blowing agents and/or other known auxiliary agents and additives,

characterised in that the diamines used as component C) have at least one sulphonamide group as substituent on at least one of their aromatic rings, compounds of the general formula

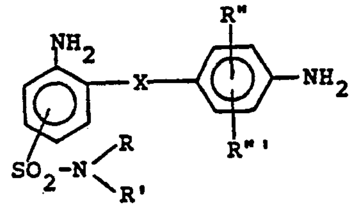

in which

X represents

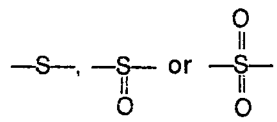

R and R′ are the same or different and denote straight or branched chain aliphatic groups having 1 to 4 carbon atoms, and

R″ and R‴ are the same or different and represent hydrogen, an alkyl group, an alkoxy or an alkylmercapto group having 1 to 4 carbon atoms, being excluded.

2. Process according to Claim 1, characterised in that the diamines used as component C) have the sulphonamide groups in the m- and/or p-position to the amino groups.

3. Process according to Claim 1 and 2, characterised in that diamines of the general formulae

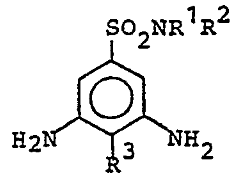

(I)

or

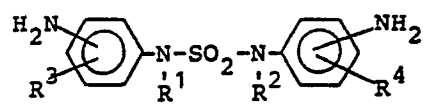

(II)

or

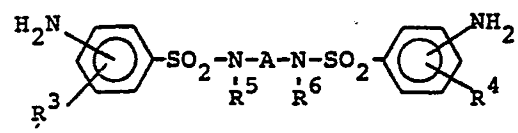

(III)

or

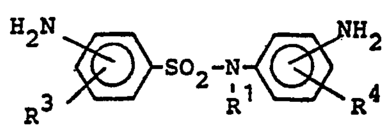

(IV)

in which

$R^1$ and $R^2$ are the same or different and represent hydrogen, an optionally branched chain alkyl group having 1 to 20 carbon atoms or an aryl or aralkyl group having 6 to 20 carbon atoms,

$R^3$ and $R^4$ are the same or different and represent hydrogen, an optionally branched chain alkyl group having 1 to 6 carbon atoms, an alkoxy group having 1 to 6 carbon atoms or a halogen atom,

A represents an alkylene bridge having 2 to 6 carbon atoms which is optionally branched chain and/or contains hetero atoms, and

$R^5$ and $R^6$ have the same meaning as $R^1$ and $R^2$ or together represent an alkylene bridge having 1 to 6 carbon atoms which is optionally branched chain and/or contains hetero atoms, are used as component C).

4. Process according to Claim 3, characterised in that diamines in which $R^2$, $R^5$ and $R^6$ represent alkyl groups having 1 to 6 carbon atoms are used.

5. Process according to Claim 3 and 4, characterised in that diamines of the formula (IV) in which $R^5$, $R^6$ and A together form a piperazine ring are used.

6. Process according to Claims 3 and 4, characterised in that diamines of the formula (I) in which $R^3$ represents chlorine or a methyl group are used.

7. Process according to Claim 3 to 5, characterised in that diamines of formula (II) to (IV) in which $R^3$ and $R^4$ represent hydrogen are used.

8. Process according to Claim 1 to 7, characterised in that the aromatic diamines containing sulphonamide groups are added in the liquid or molten state to an isocyanate pre-polymer of components A) and B) or together with component B) and optionally D) are added to the polyisocyanate A).

9. Process according to Claim 1 to 7, characterised in that the polyisocyanates A) are reacted in a heterogeneous phase with a suspension of the aromatic diamines C) containing sulphonamide groups in components B) and optionally D) at temperatures above or below the melting point of component C).

10. Process according to Claim 9, characterised in that the aromatic diamines containing sulphonamide groups are used in the form of a powder having an average particle size of 1 to 50 µm.

**Revendications**

1. Procédé de préparation d'élastomères de polyuréthanne-urées par réaction, éventuellement par paliers, de

A) des polyisocyanates,

B) des composés portant au moins deux atomes d'hydrogène réactifs à l'égard des isocyanates et présentant un poids moléculaire de 400 à 10 000,

C) des diamines aromatiques mono- ou di-cycliques servant d'agents d'allongement des chaînes et, le cas échéant,

D) d'autres composés réactifs à l'égard des isocyanates et présentant un poids moléculaire de 32 à 400, en tant qu'agents d'allongement des chaînes additionnels, éventuellement en présence de

E) des activateurs, des agents gonflants et/ou d'autres produits auxiliaires et additifs connus en soi,

caractérisé en ce que l'on utilise en tant que composant C) des diamines contenant en tant que substituants sur au moins un de leurs noyaux aromatiques au moins un groupe sulfonamide, à l'exception des composés de formule générale

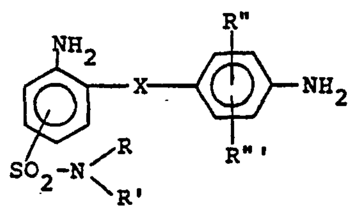

dans laquelle

X représente

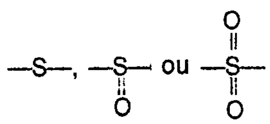
ou

R et R', identiques ou différents, représentent des restes aliphatiques linéaires ou ramifiés en $C_1$-$C_4$ et

R'' et R''', identiques ou différents, représentent l'hydrogène, un groupe alkyle, un groupe alcoxy ou alkylmercapto en $C_1$-$C_4$.

2. Procédé selon la revendication 1, caractérisé en ce que l'on utilise en tant que composant C) des diamines dans lesquelles les groupes sulfonamide sont en position m et/ou p par rapport aux groupes amino.

3. Procédé selon les revendications 1 et 2, caractérisé en ce que l'on utilise en tant que composant C) des diamines de formules générales :

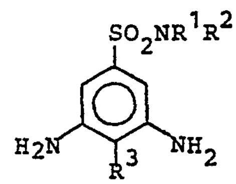

(I)

ou

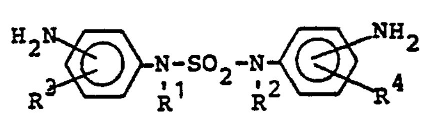

(II)

ou

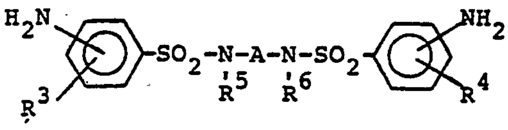

(III)

ou

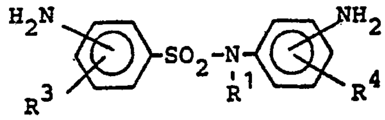

(IV)

dans lesquelles

$R^1$ et $R^2$, identiques ou différents, représentent l'hydrogène, un groupe alkyle éventuellement ramifié en $C_1$-$C_{20}$ ou un groupe aryle ou aralkyle en $C_6$-$C_{20}$,

$R^3$ et $R^4$, identiques ou différents, représentent l'hydrogène, un groupe alkyle éventuellement ramifié en $C_1$-$C_6$, un groupe alcoxy en $C_1$-$C_6$ ou un atome d'halogène,

A représente un pont alkylène éventuellement ramifié et/ou contenant des hétéroatomes en $C_2$-$C_6$ et $R^5$ et $R^6$ ont la même signification que $R^1$ et $R^2$ ou forment ensemble un pont alkylène en $C_1$-$C_6$ éventuellement ramifié et/ou contenant des hétéroatomes.

4. Procédé selon la revendication 3, caractérisé en ce que l'on utilise des diamines dans lesquelles $R^2$, $R^5$ et $R^6$ représentent des groupes alkyle en $C_1$-$C_6$.

5. Procédé selon les revendications 3 et 4, caractérisé en ce que l'on utilise les diamines de formule (IV) dans laquelle $R^5$, $R^6$ et A forment ensemble un noyau pipérazine.

6. Procédé selon les revendications 3 et 4, caractérisé en ce que l'on utilise des diamines de formule (I) laquelle $R^3$ représente le chlore ou un groupe méthyle.

7. Procédé selon les revendications 3 à 5, caractérisé en ce que l'on utilise des diamines de formules (II) à (IV) dans lesquelles $R^3$ et $R^4$ représentent l'hydrogène.

8. Procédé selon les revendications 1 à 7, caractérisé en ce que l'on ajoute les diamines aromatiques contenant des groupes sulfonamide à l'état liquide ou fondu à un prépolymère d'isocyanate formé à partir des composants A) et B) ou bien, avec le composant B) et éventuellement le composé D), au polyisocyanate A).

9. Procédé selon les revendications 1 à 7, caractérisé en ce que l'on fait réagir les polyisocyanates A) avec une suspension des diamines aromatiques contenant des groupes sulfonamide C) dans les composants B) et, le cas échéant, D) en phase hétérogène, à des températures supérieures ou inférieures au point de fusion du composant C).

10. Procédé selon la revendication 9, caractérisé en ce que l'on met en œuvre les diamines aromatiques contenant des groupes sulfonamides à l'état de poudre à une dimension de grain moyenne de 1 à 50 μm.